# EUROPEAN PATENT SPECIFICATION

(11) **EP 3 431 804 B1**
(45) Date of publication and mention of the grant of the patent: **08.04.2020**
(21) Application number: 18184856.5
(22) Date of filing: 20.07.2018
(51) Int. Cl.: F16D 55/22, F16D 65/02, F16D 65/097, F16D 65/00, F16D 65/092

(54) **VEHICLE BRAKING UNIT, ASSOCIATED BRAKE PAD AND ASSOCIATED METHOD FOR NOISE REDUCTION**
FAHRZEUGBREMSEINHEIT, ZUGEHÖRIGER BREMSBELAG UND ZUGEHÖRIGES VERFAHREN ZUR GERÄUSCHREDUZIERUNG
UNITÉ DE FREINAGE DE VÉHICULE, PLAQUETTE DE FREIN ASSOCIÉE ET PROCÉDÉ ASSOCIÉ DE RÉDUCTION DU BRUIT

(30) Priority: 21.07.2017 IT 201700083593
(43) Date of publication of application: 23.01.2019
(73) Proprietor: ITT Italia S.r.l., 20020 Lainate (MI) (IT)
(72) Inventor: MERLO, Fabrizio, 12032 BARGE (CN) (IT); DE DOMINICIS, Sandro, 12032 BARGE (CN) (IT)
(74) Representative: Plebani, Rinaldo

(56) References cited:
- WO-A1-2017/013619
- US-A- 5 289 904

## Description

### Cross-Reference to Related Applications

This application claims priority from Italian Patent Application No. 102017000083593 filed on July 21, 2017.

### Technical Field of the Invention

The present invention relates to a vehicle braking unit, in particular a brake caliper unit for a disc brake, featuring a low noise level. The invention further relates to an associated brake pad that can be advantageously used with the brake caliper unit of the invention, and to a method for obtaining the reduction of operating noise level of a vehicle braking unit.

### Prior Art

It is known that one of the problems in the braking units for disc brakes is their operating noise: this phenomenon has a complex and multi-factorial origin and depends both on the driving vibration of the vehicle associated with the inevitable assembly clearances between braking elements, such as brake pads and shoes and the respective supports, and from the contact phenomena occurring between the sliding part of the braking elements and the supports, during the actuation of the braking system.

Normally, brake pads are supported by brake calipers, on which they can slide to get into contact against the brake disc when the actuating members of the brake caliper (generally hydraulically operated pistons, or electric actuators) are actuated, which in use press the brake pads against the disc when the brake pedal is pressed by a user.

Therefore, noise can occur both when the brake is deactivated, due to the vibrations between the pads and the brake caliper, and when the brake is actuated, due to slipping between the brake pad guide elements (usually consisting of protruding parts also called "hammers") and the displacement guides for the brake pads carried by the brake caliper. Both these types of noise can be very annoying for the user, so, on modern vehicles, the need to eliminate or at least reduce these noises in a simple and above all economic way is strongly felt.

A commonly used solution is to utilize rubber or other elastomer coatings, for example applied to the outer side, opposite to the brake pad, of sliding springs for the brake pad; this solution is very effective for reducing/eliminating noise, but is expensive; in addition, the friction between the sliding spring and the guide support increases, which in use can produce jamming.

US 5,622,785 envisages, in order to overcome or at least reduce this drawback, to paint, by powder coating, the guide surface of the brake pads (in practical terms the "hammers") with a coating composition based on phenolic resins and also including graphite and molybdenum disulphide, for then baking/curing the coating at high temperature. This too is an expensive and especially difficult solution to be implemented in mass production, which requires high volumes.

An anti-friction coating composition sold under the trade name "Molykote™" is also on the market, consisting of a PTFE (polytetrafluoroethylene) dispersed in an organic base of a binder and a solvent, which is said to also reduce noise. This composition is applicable in a simpler way than that of US 5,622,785, since, for example, it can simply be sprayed onto the surfaces to be treated, but does not overcome the drawbacks of the state of the art.

WO 2017/013619 A1 discloses a vehicle braking unit in which the anti-noise sliding coating contains a phenolic resin polymer, PTFE particles, and molybdenum sulfide.

### Summary of the Invention

The object of the present invention is to provide a vehicle braking unit, in particular a brake caliper unit for a disc brake, having a reduced or negligible noise, comparable to that of the known elastomeric or rubber coatings, but without the drawbacks of the latter.

The invention thus relates to a vehicle braking unit, in particular a brake caliper unit for a disc brake, and to a braking element such as a brake pad that is conveniently usable with such a brake caliper unit, as defined in the attached claims. The invention also relates to an associated method of noise reduction in a braking unit of a vehicle.

According to the main aspect of the invention, first and/or second guide surfaces that are integral, with respect to braking elements such as a brake pad and to a support for the braking elements such as a brake caliper or related retaining springs, and that cooperate together to guide and support the braking element when it is moved towards an element to be braked by the activation of the actuation elements, are at least partially or better still completely covered by an anti-noise coating or layer consisting of a layer of a crosslinked polymeric resin with glass particles, preferably spherical shaped, with size not larger than 50 micron and preferably not smaller than 10 micron being dispersed therein.

The polymeric resin is, according to an aspect of the invention, constituted by a vinyl-acrylic copolymer, to which an acrylic-urethane copolymer is preferably associated.

The average composition of the anti-noise coating of the invention is as follows (% is in volume):

| | |
|---|---|
| • vinyl-acrylic copolymer | 55-75%; |
| • acryl-ureic copolymer | 10-20%; |
| • mineral fibers | 3-8%: |
| • fillers and inerts (glass spheres) | 12-18%; |
| • modifiers and additives | 0.5-1.8%. |

The anti-noise coating or layer can be applied by any method, for example by spraying, by roller or by immersion, and is crosslinked (and then hardened and made stable) at a relatively low temperature, between 100°C and 210°C. It can also be painted (therefore coated) with the usual powder paints with which the metal supports or "backplate" of the brake pads are coated without losing effectiveness.

The crosslinking of the anti-noise coating can be performed both before and after the possible application of the paint; therefore, either the anti-noise coating is crosslinked and then the same surface already coated with the anti-noise coating is painted and then the painted layer is crosslinked, or both the anti-noise coating of the invention and the paint are polymerized essentially at the same time, making a single crosslinking after the application of both layers (anti-noise and paint).

The application of the anti-noise coating of the invention only to parts of the brake pads (for example the "hammers" of the backplate) is therefore economical and does not create problems in the production cycle. The final thickness of the anti-noise layer of the invention is between 20 and 100 microns.

### Brief Description of the Drawings

Further characteristics and advantages of the present invention will become clear from the following description of its exemplary non-limiting embodiments given purely by way of example and with reference to the drawings attached, in which:
- Figure 1 illustrates schematically a vehicle braking unit produced according to two possible embodiments of the invention;
- Figure 2 shows in enlarged scale a photomicrography of an anti-noise layer not made according to the invention but used for comparison, complete with a spectrographic analysis;
- Figure 3 shows in enlarged scale a SEWM photomicrography of an anti-noise layer made according to the invention, complete with a spectrographic analysis; and
- Figures 4 to 8 schematically illustrate relevant parts of the NVH (Noise-Vibration-Harshness) test results according to SAEJ2521 performed on the braking unit of figure 1 equipped with the anti-noise coating according to the invention and of other comparative, anti-friction or anti-noise coatings, known in the state of the art.

### Detailed Description

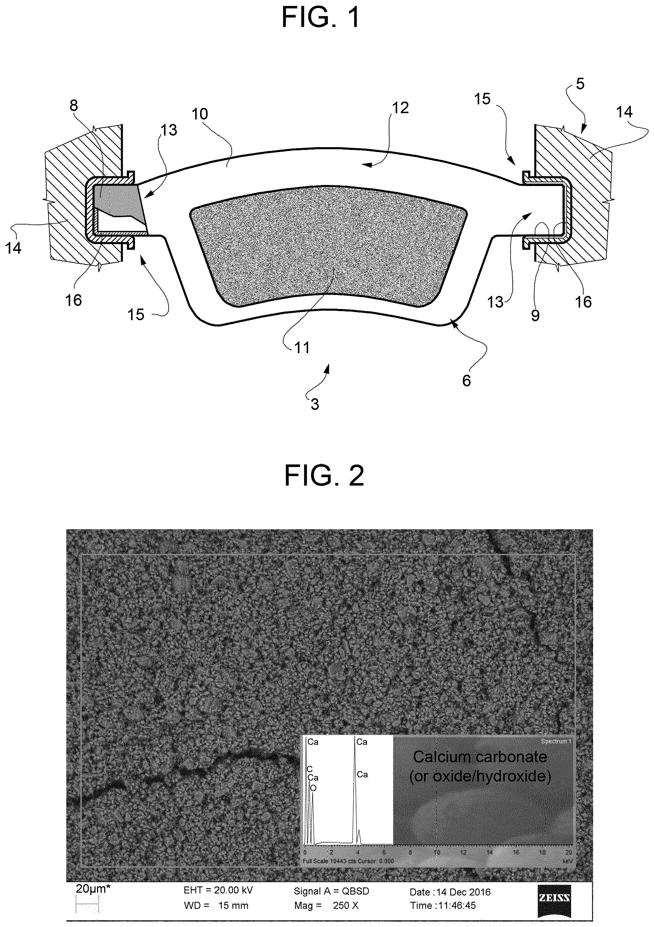

With reference to figure 1, in it with reference number 3 is indicated a braking unit, defined in the non-limiting but preferred example illustrated by a brake caliper unit 3, designed to cooperate with a known brake disc, not illustrated for simplicity.

The braking unit or brake caliper unit 3 comprises a support 5, in the example illustrated consisting of a brake caliper body, designed to be positioned in use close to an element to be braked or brake disc, in particular astride of the same, and at least a braking element 6 that is carried in a movable way by the support 5 and that is suitable/configured for cooperating, in use by friction, with the element to be braked, under the action of actuation elements, of a type known in the art and not illustrated for simplicity, which are carried by the support 5 and which are suitable, when activated, for pushing the braking element 6 against the element to be braked in order to apply upon the same, by friction, a braking torque.

In the illustrated example, the braking element consists of a brake pad 6 carried by the support 5. The braking unit 3 further comprises first guide surfaces 8 and second guide surfaces 9 that cooperate with one another in order to guide and support the braking element 6 when this is moved in a known way by the actuation elements towards the element to be braked.

The guide surfaces 8 are integral to the braking element 6; in fact, each braking element 6 comprises a metallic support element 10, that integrally carries a block of friction material 11 upon a first face 12 thereof that is designed/configured to face in use towards the element to be braked, in the example illustrated the brake disc known and not illustrated; in the example illustrated the braking element consists of a brake pad 6 and the metallic support element 10 is made in the form of a flat plate.

In every case, the metallic support element 10 comprises a guide portion 13 (in the example illustrated two opposing guide portions or "hammers" 13) for guiding the braking element 6 within a guide element 14 of the support 5 of the braking unit 3 and the guide surfaces 8 are delimiting surfaces of the guide portion 13 of the metallic support element 10.

The guide surfaces 9 are instead integral to the support 5 and consist either of delimiting surfaces of the guide element 14 of the support 5 facing the guide surfaces 8 of the braking element 6 or, in the preferred embodiment, as illustrated in figure 1, of a lateral surface within a retaining spring 15 for the braking element 6 which is integrally carried, in a known way, by the guide element 14 of the support 5 and which cooperates by contacting and sliding against the guide portion 13 of the braking element 6.

According to the main characteristic of the invention, one of the guide surfaces 8 or 9, or both, is covered at least in part, and preferably entirely, by an anti-noise coating or layer 16 consisting of a layer of a polymeric resin, preferably crosslinked, with glass rounded particles or spheres being dispersed therein. Preferably, the anti-noise layer or coating 16 is applied only on the outer side surface of the hammers 13 so as to define the guide surfaces 8 therewith.

The polymeric resin that acts as the matrix for the glass spherical particles consists, according to an aspect of the invention, of a vinyl-acrylic copolymer, to which an acrylic-urethane copolymer is preferably associated.

The average composition of the anti-noise coating of the invention is as follows (% is in volume):

| | |
|---|---|
| • vinyl-acrylic copolymer | 55-75%; |
| • acryl-ureic copolymer | 10-20%; |
| • mineral fibers | 3-8%: |
| • fillers and inerts (glass spheres) | 12-18%; |
| • modifiers and additives | 0.5-1.8%. |

The anti-noise coating or layer 16 can be applied by any method, for example by spray, roller or by immersion, and is crosslinked (and then hardened and made stable) at a relatively low temperature, between 100°C and 210°C. It can also be painted (therefore covered) with the usual powder paints with which the metal supports or "backplate" of the brake pads are coated without losing effectiveness. Its application only to parts of the brake pads (for example the "hammers" of the backplate) is therefore economical and does not create problems in the production cycle. The final thickness of the anti-noise layer of the invention is between 20 and 100 microns.

According to a possible and preferred embodiment, illustrated in the left part of figure 1, the sliding coating or layer 16 is arranged over the first guide surfaces 8; the invention therefore consists, in this case, of a vehicle braking element 6, in particular consisting of a brake pad, comprising a block of friction material 11 and a metallic support element 10 that integrally supports the block of friction material 11 upon one of its faces 12 which is designed to face in use towards an element to be braked, and which includes a guide portion 13 defined in the example illustrated by two facing lateral appendages of the support element 10, covered with a sliding layer 16 consisting of an anti-friction material applied directly to the metallic support element 10. The anti-noise layer or coating 16 on the portion 13 consists of a layer of a crosslinked polymer resin, in which polymeric layer spheroidal particles or glass spheres are dispersed in an amount comprised between 12% by volume and 18% by volume on the total volume of the coating 16.

According to this embodiment, each brake pad 6 is mounted on the support 5 and can slide on a pair of known retention springs 15 which are integral to the support 5 and which are seated within the guide elements 14 whereby the coating layer or coating 16 cooperates in use by contacting the retaining springs 15.

According to the alternative embodiment illustrated in the right side of figure 1, the anti-noise coating or layer 16 is arranged upon the second guiding surfaces 9, which consist of the internal lateral surface of each retaining spring 15, which is in turn integrally carried by the guide element 14 of the support 5 and which cooperates by contacting and sliding against a guide portion 13 of the braking element 6, which is instead of the traditional type, simply painted or treated with an anticorrosion layer.

According to a further possible alternative embodiment not illustrated for simplicity, the springs 15 may also be absent and the sliding layer or coating 16 is in this case carried by the guiding surfaces 9 consisting of the delimiting surfaces of the guide element 14 of the support 5 facing the first guide surfaces 8 of the braking element 6.

According to a further possible embodiment, not illustrated for simplicity, the guiding surfaces 8 and 9 can also be defined, respectively, by an internal lateral surface of through holes drilled through the metallic support element 10 at the guide portion 13, and by an external lateral surface of respective pins associated to said holes and integrally carried by the support 5 and which therefore constitute the guide element 14 of the support 5. In this case the sliding layer or coating 16 is carried by the pins and therefore by the guide surface 9.

Obviously, as already indicated, in all of the disclosed embodiments the layer or sliding coating 16 can be applied, wherever possible (for example in the absence of anticorrosion coating layers), to both guide surfaces 8 and 9.

Experimental tests carried out by the Applicant have surprisingly highlighted, as it will be seen, that in a vehicle braking unit in which one or both the guide surfaces 8,9 are coated with an anti-noise layer 16 implemented as described, the operating noise is in fact eliminated, providing results comparable to those that can now only be obtained with rubber or elastomer coatings.

From what has been described above, it is evident that the invention is also related to a method for obtaining the reduction/elimination of noise in a vehicle braking unit 3 of the type comprising at least one braking element 6, a support 5 for the braking element configured for allowing a relative movement of the braking element with respect to the support to interact with an element to be braked and first 8 and second 9 guide surfaces which are integral, respectively, with the braking element and the support, and which cooperate with each other to guide and support the braking element; characterized in that it comprises the steps of:
- covering at least one of said first and second guide surfaces 8,9 with a layer of a polymeric resin with glass particles having a round, preferably spherical, shape and of micrometric dimensions being dispersed therein; and
- baking/curing the polymeric resin layer at a temperature between 100 and 210°C, in order to allow the crosslinking of the polymeric resin and to obtain upon the at least one first or second guide surface 8,9 an anti-noise coating 16.

The polymeric resin layer, bearing dispersed therein said glass particles, is applied using a method chosen from the group consisting of: by spraying, by roller, by immersion; and, after being crosslinked, it is paintable without losing effectiveness.

The polymeric resin is selected from the group consisting of: a vinyl-acrylic copolymer; an acryl-urethane copolymer; combinations thereof; with preference for the presence in greater quantity of the vinyl-acrylic copolymer.

The invention is now further described by means of the following practical implementation example.

### EXAMPLE

A series of identical brake pads and retaining springs, of the type illustrated schematically in figure 1, is manufactured in a known way. The guide portion 13 of some of these brake pads is coated with an anti-noise layer or coating, 80 microns thick, obtained by dispersing glass spheres smaller than 20 microns for some coatings and always smaller than 50 microns for other coagings in a vinyl-acrylic polymeric resin, the guide portion of other brake pads being coated with a 30 microns thick rubber layer or with a Molikote™ D-708 layer, or with a layer of the same polymeric resin but without the glass particles and instead provided with another inert filler, and others being left without coating (bare metal).

The same operation is performed on commercial standard retaining springs, depositing the coatings, when present, on the internal lateral surface of the retaining springs, which consist of a U-shaped metal sheet.

The brake pads are assembled in a braking unit like that of figure 1 equipped with uncoated and tested springs; subsequently the tests are repeated on brake pads without coating but assembled with the coated springs.

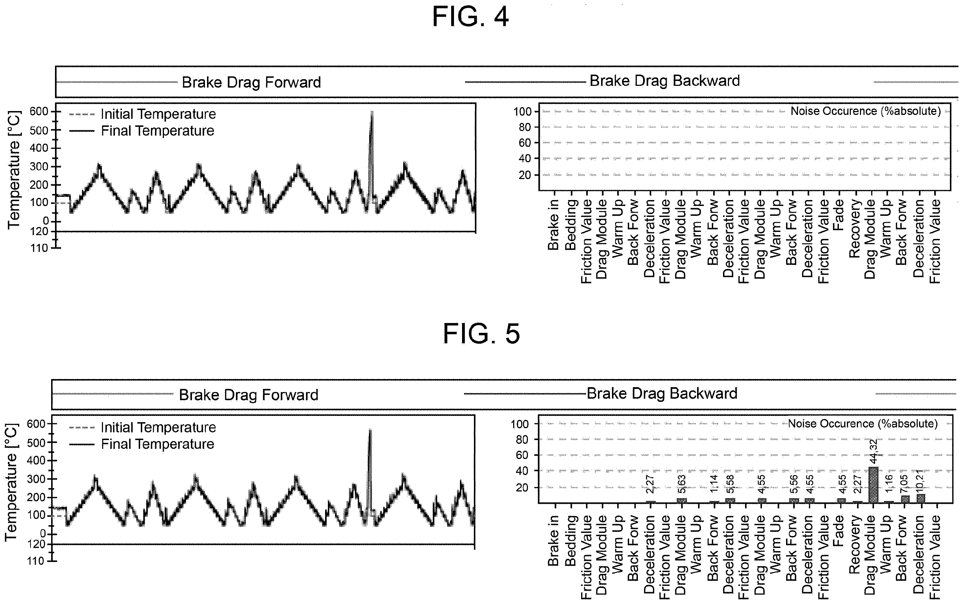

A standard NVH test according to the SAEJ2521 standard is performed and the results obtained, which can be overlapped for both the springs and the coated brake pads, are reported in figures 4 to 8.

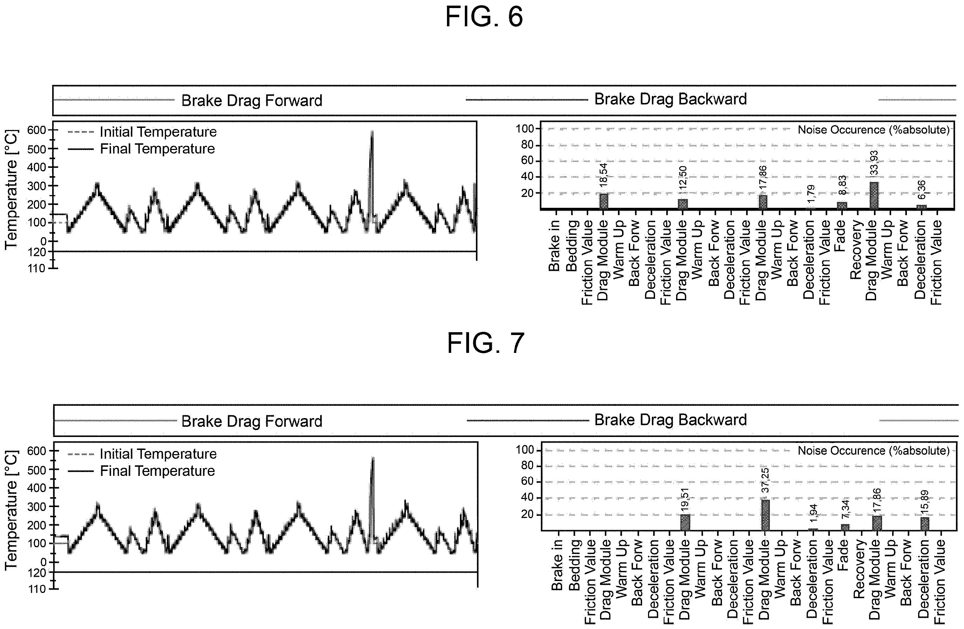

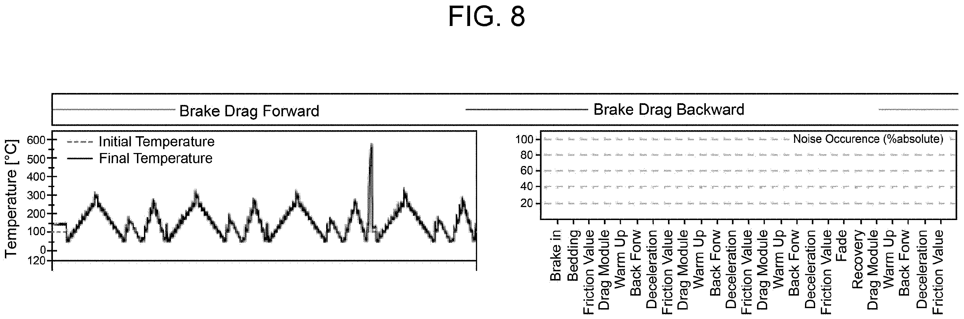

Figure 4 relates to the test performed in the presence of a rubber coating according to the state of the art (on the external side of the spring between the spring and cast iron of the caliper); figure 5 relates to the test performed in the absence of coatings (therefore with metal-on-metal contact between the surfaces 8,9; figure 6 relates to the test carried out in the presence of a Molikote™ D-708 layer; figure 7 relates to the test carried out in the presence of a crosslinked polymeric layer according to the invention, but without the micrometric glass spheres; and figure 8 relates to the test carried out in the presence of a crosslinked polymeric layer according to the invention, in which the glass spheres of micrometric dimensions (below 20 and/or 50 microns) are present in the polymeric resin layer.

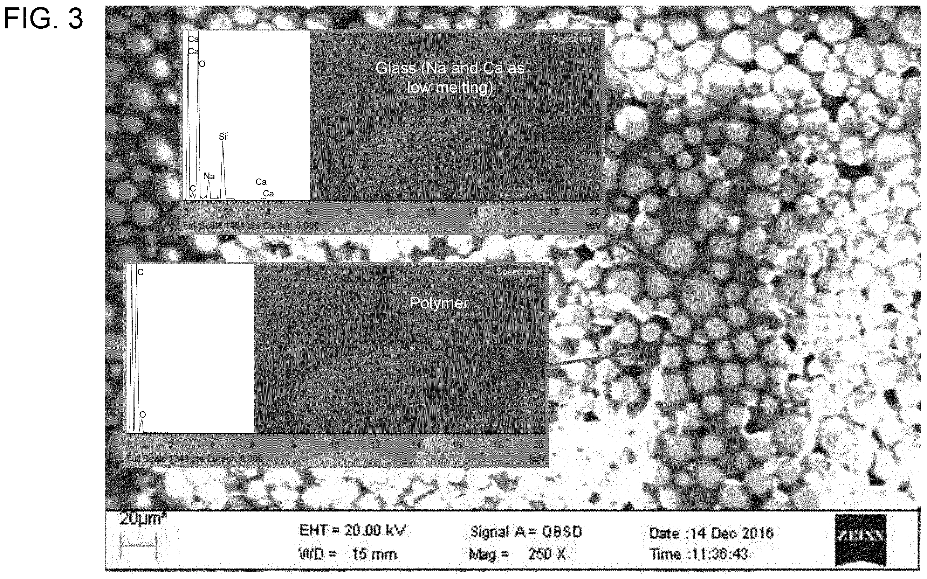

Figures 2 and 3 reproduce photomicrographs of these last two layers: Figure 2 relates to the layer with the polymeric resin of the invention but with carbonate and calcium oxide as filler and figure 3 relates to the layer with the polymeric resin of the invention and with the micrometric glass beads according to the combination of the invention; the composition of the glass is shown to be based on Na and Ca as low melting.

As it is possible to immediately detect from the examination of figures 4-8, the springs/pads provided with the rubberized layer (figure 4) have a standard thermal profile (graph on the left) and no significant noise (graph on the right, it is white).

The pads/springs not provided with any coating (see figure 5, right) have a more pronounced noise profile, and present considerable noise at different frequencies and throughout the braking cycle; the springs/pads coated with Molikote™ D-708 (see figure 6 on the right) have a noisy profile also with higher peaks than rubber pads/springs and lower noise than that of bare springs/pads (without coating), but still present at a high level especially during some moments of the braking cycle; the polymer-coated brake springs/pads with a vinyl-acrylic base (see figure 7 on the right) have a noisy profile that does not overlap with that of the rubberized springs/pads (see figure 4 on the right), and still have noise peaks, comparable to the Molikote™ pads/springs D-708.

Finally, the pads/springs provided with the anti-noise coating of the invention (see figure 8 on the right), therefore with the glass spheres dispersed in an at least partially elastic polymeric resin, obtained with the combination of a specially selected polymeric resin or pair of resins, present experimental data completely overlapping with those of the rubber springs/pads, with no noise detectable by a user (graph on top right, white).

The objectives of the invention are therefore fully achieved.

## Claims

1. A vehicle braking unit (3), in particular a brake caliper unit for a disc brake, of the type comprising a support (5) designed to be arranged in use close to an element to be braked, braking elements (6) which are carried in a movable way by the support and which are suited for cooperating in use by friction with the element to be braked, and first (8) and second (9) guide surfaces that are integral with respect to the braking elements and the support and that cooperate together to guide and support the braking elements when they are moved towards the element to be braked by the activation of actuation elements; **characterized in that** the first and/or the second guide surfaces (8,9) are at least partially covered by an anti-noise coating (16) consisting of:
i)- a layer of a polymeric resin;
ii)- glass particles of rounded shape, preferably spheres, dispersed in the polymeric resin layer.

2. Braking unit according to claim 1, **characterized in that** the glass particles have micrometric dimensions.

3. Braking unit according to claim 1 or 2, **characterized in that** the glass particles have dimensions not greater than 50 microns and, preferably, not less than 10 microns.

4. Braking unit according to one of the preceding claims, **characterized in that** the polymeric resin consists of a vinyl-acrylic copolymer.

5. Braking unit according to claim 4, **characterized in that** the polymeric resin consists of a vinyl-acrylic copolymer and an acryl-urethane copolymer.

6. Braking unit according to one of the preceding claims, **characterized in that** the anti-noise coating (16) has the following percentage composition (% is in volume):
| | |
|---|---|
| • vinyl-acrylic copolymer | 55-75%; |
| • acryl-ureic copolymer | 10-20%; |
| • mineral fibers | 3-8%: |
| • fillers and inerts (glass spheres) | 12-18%; |
| • modifiers and additives | 0.5-1.8%. |

7. Braking unit according to one of the preceding claims, **characterized in that** it comprises retaining springs (15) for the braking element (6) carried by the support (5) and inserted between the support and guide portions (13) of the braking element (6); the anti-noise coating being arranged on an inner side surface (9) of the retaining springs (15).

8. Braking unit according to one of the preceding claims, **characterized in that** the anti-noise coating has a thickness of between 20 and 100 microns.

9. Vehicle braking element (6), in particular brake pad, comprising a block of friction material (11) and a metallic support element (10) that integrally carries the block of friction material upon a first face (12) thereof which is designed to face in use towards an element to be braked, the metallic support element comprising a guide portion (13) for guiding the braking element within a guide element (14), **characterized in that** the guide portion (13) is at least partially covered with an anti-noise coating (16) applied directly to the metallic support element (10) and consisting of:
i)- a layer of a polymeric resin;
ii)- glass particles of rounded shape, preferably spheres, dispersed in the polymeric resin layer.

10. Method for obtaining the reduction/elimination of noise in a vehicle braking unit (3) of the type comprising at least a braking element (6), a support (5) for the braking element configured to allow a relative movement of the braking element with respect to the support to interact with an element to be braked and first (8) and second (9) guide surfaces which are integral, respectively, to the braking element and the support and which cooperate with each other to guide and support the braking element; **characterized by the fact** of comprising the steps of:
- covering at least one of said first (8) and second (9) guide surfaces with a layer of a polymeric resin within which glass particles of round, preferably spherical, shape and of micrometric dimensions have been dispersed; and
- baking/curing the layer of a polymeric resin at a temperature between 100 and 210°C, in order to allow the crosslinking of the polymeric resin and to obtain upon the said at least one said first (8) and second (9) guide surfaces an anti-noise coating.

11. Method according to claim 10, **characterized in that** the polymeric resin layer, bearing dispersed therein said glass particles, is applied using a method chosen from the group consisting of: by spraying, by roller, by immersion; said polymeric resin layer bearing dispersed therein said glass particles, being paintable without losing effectiveness after the polymeric resin has been crosslinked.

## Patentansprüche

1. Fahrzeugbremseinheit (3), insbesondere Bremssatteleinheit für eine Scheibenbremse, des Typs, umfassend einen Träger (5), der dazu bestimmt ist, in Gebrauch in der Nähe eines zu bremsenden Elements angeordnet zu werden, Bremselemente (6), die beweglich von dem Träger getragen werden und die geeignet sind, in Gebrauch durch Reibung mit dem zu bremsenden Element zusammenzuwirken, und eine erste (8) und eine zweite (9) Führungsfläche, die in Bezug auf die Bremselemente und den Träger integral ausgebildet sind und die miteinander zusammenwirken, um die Bremselemente zu führen und zu tragen, wenn sie durch Aktivierung von Betätigungselementen auf das zu bremsende Element zubewegt werden; **dadurch gekennzeichnet, dass** die erste und/oder die zweite Führungsfläche (8, 9) zumindest teilweise von einer Antigeräuschbeschichtung (16) bedeckt sind, die besteht aus:
i) - einer Schicht eines Polymerharzes;
ii) - in der Polymerharzschicht dispergierten Glaspartikeln mit abgerundeter Form, vorzugsweise Kugeln.

2. Bremseinheit nach Anspruch 1, **dadurch gekennzeichnet, dass** die Glaspartikel mikrometrische Abmessungen aufweisen.

3. Bremseinheit nach Anspruch 1 oder 2, **dadurch gekennzeichnet, dass** die Glaspartikel Abmessungen von nicht mehr als 50 Mikrometern und vorzugsweise nicht weniger als 10 Mikrometern aufweisen.

4. Bremseinheit nach einem der vorhergehenden Ansprüche, **dadurch gekennzeichnet, dass** das Polymerharz aus einem Vinyl-Acryl-Copolymer besteht.

5. Bremseinheit nach Anspruch 4, **dadurch gekennzeichnet, dass** das Polymerharz aus einem Vinyl-Acryl-Copolymer und einem Acryl-Urethan-Copolymer besteht.

6. Bremseinheit nach einem der vorhergehenden Ansprüche, **dadurch gekennzeichnet, dass** die Antigeräuschbeschichtung (16) die folgende prozentuale Zusammensetzung (in Volumen-%) aufweist:
| | |
|---|---|
| • Vinyl-Acryl-Copolymer | 55-75 %; |
| • Acryl-Ureic-Copolymer | 10-20 %, |
| • Mineralfasern | 3-8 %: |
| • Füller und Inerte (Glaskugeln) | 12-18 %; |
| • Modifizierungsmittel und Additive | 0,5-1,8 %. |

7. Bremseinheit nach einem der vorhergehenden Ansprüche, **dadurch gekennzeichnet, dass** sie Haltefedern (15) für das Bremselement (6) umfasst, die von dem Träger (5) getragen werden und zwischen den Träger- und Führungsabschnitten (13) des Bremselements (6) eingesetzt sind; wobei die Antigeräuschbeschichtung an einer inneren Seitenfläche (9) der Haltefedern (15) angeordnet ist.

8. Bremseinheit nach einem der vorhergehenden Ansprüche, **dadurch gekennzeichnet, dass** die Antigeräuschbeschichtung eine Dicke zwischen 20 und 100 Mikrometern aufweist.

9. Fahrzeugbremselement (6), insbesondere Bremsbelag, umfassend einen Block aus Reibmaterial (11) und ein metallisches Trägerelement (10), das den Block aus Reibmaterial auf einer ersten Seite (12) davon integral trägt, die so ausgestaltet ist, dass sie in Gebrauch in Richtung auf ein zu bremsendes Element gerichtet ist, wobei das metallische Trägerelement einen Führungsabschnitt (13) zur Führung des Bremselements innerhalb eines Führungselements (14) umfasst, **dadurch gekennzeichnet, dass** der Führungsabschnitt (13) zumindest teilweise mit einer Antigeräuschbeschichtung (16) bedeckt ist, die direkt auf das metallische Trägerelement (10) aufgebracht ist und besteht aus:
i) - einer Schicht eines Polymerharzes;
ii) - in der Polymerharzschicht dispergierten Glaspartikeln mit abgerundeter Form, vorzugsweise Kugeln.

10. Verfahren zum Vermindern/Beseitigen von Geräuschen in einer Fahrzeugbremseinheit (3) des Typs, umfassend zumindest ein Bremselement (6), einen Träger (5) für das Bremselement, der so konfiguriert ist, dass er eine Relativbewegung des Bremselements in Bezug auf den Träger ermöglicht, um mit einem zu bremsenden Element zusammenzuwirken, und erste (8) und zweite (9) Führungsflächen, die mit dem Bremselement und dem Träger jeweils integral ausgebildet sind und die miteinander zusammenwirken, um das Bremselement zu führen und zu tragen; **gekennzeichnet durch die Tatsache, dass** es die Schritte umfasst:
- Bedecken zumindest einer der ersten (8) und zweiten (9) Führungsflächen mit einer Schicht aus einem Polymerharz, in der Glaspartikel dispergiert sind, die eine runde Form, vorzugsweise Kugelform, und mikrometrische Abmessungen aufweisen; und
- Brennen/Härten der Schicht eines Polymerharzes bei einer Temperatur zwischen 100 und 210 °C, um die Vernetzung des Polymerharzes zu ermöglichen und auf der zumindest einen ersten (8) und zweiten (9) Führungsfläche eine Antigeräuschbeschichtung zu erhalten.

11. Verfahren nach Anspruch 10, **dadurch gekennzeichnet, dass** die Polymerharzschicht, in der die Glaspartikel dispergiert sind, unter Verwendung eines Verfahrens aufgebracht wird, das aus der Gruppe ausgewählt ist, bestehend aus durch Aufsprühen, durch Walze, durch Eintauchen; wobei die Polymerharzschicht, in der die Glaspartikel dispergiert sind, streichfähig ist, ohne dass es nach dem Vernetzen des Polymerharzes zu einem Wirksamkeitsverlust kommt.

## Revendications

1. Unité de freinage du véhicule (3), en particulier un étrier de frein pour un frein à disque, du type comprenant un support (5) conçu pour être agencé en utilisation près d'un élément pour être freiné, des éléments de freinage (6) qui sont portés d'une manière mobile par le support, et qui sont adaptés à la coopération en utilisation par friction avec l'élément à freiner, et des première (8) et deuxième (9) surfaces de guidage qui sont solidaires par rapport aux éléments de freinage et au support et qui coopèrent ensemble pour guider et supporter les éléments de freinage lorsqu'ils sont déplacés vers l'élément à freiner par l'activation d'éléments d'actionnement ; **caractérisé en ce que** les premières et/ ou les deuxièmes surfaces du guide (8,9) sont au moins partiellement couvertes par un revêtement anti-bruit (16) comprenant :
i) - une couche de résine polymère ;
ii) - particules de verre de forme arrondie, de préférence des sphères, dispersées dans la couche de résine polymère.

2. Unité de freinage selon la revendication 1, **caractérisée en ce que** les particules de verre ont des dimensions micrométriques.

3. Unité de freinage selon la revendication 1 ou 2, **caractérisée en ce que** les particules de verre ont des dimensions non supérieures à 50 microns et, de préférence, de pas moins de 10 microns.

4. Unité de freinage selon l'une des revendications précédentes, **caractérisée en ce que** la résine polymère se compose d'un copolymère vinylacrylique.

5. Unité de freinage selon la revendication 4, **caractérisée en ce que** la résine polymère se compose d'un copolymère vinylacrylique. et d'un copolymère acryl-uréthane.

6. Unité de freinage selon l'une des revendications précédentes, **caractérisée en ce que** le revêtement anti-bruit (16) présente la composition de pourcentage suivante (% est en volume) :
| | |
|---|---|
| • copolymère vinylacrylique | 55-75 % ; |
| • copolymère acryl-uréique | 10-20 % ; |
| • fibres minérales | 3-8 % : |
| • charges et inertes (sphères de verre) | 12-18 % ; |
| • modificateurs et additifs | 0,5-1,8 %. |

7. Unité de freinage selon l'une des revendications précédentes, **caractérisée en ce qu'**elle comprend des ressorts de retenue (15) pour l'élément de freinage (6) portés par le support (5) et insérés entre le support et les parties de guidage (13) de l'élément de freinage (6) ; le revêtement anti-bruit étant agencé sur une surface latérale interne (9) des ressorts de retenue (15).

8. Unité de freinage selon l'une des revendications précédentes, **caractérisée en ce que** le revêtement anti-bruit a une épaisseur comprise entre 20 et 100 microns.

9. Élément de freinage du véhicule (6), en particulier une plaquette de frein, comprenant un bloc de matériau de friction (11) et un élément de support métallique (10) qui porte intégralement le bloc de matériau de friction sur un premier côté (12) de celui qui est conçu pour faire face en utilisation à un élément à freiner, l'élément de support métallique comprenant une partie de guidage (13) pour le guidage de l'élément de freinage dans un élément de guidage (14), **caractérisé en ce que** la partie de guidage (13) est au moins partiellement recouverte d'un revêtement anti-bruit (16) appliqué directement sur l'élément de support métallique (10) et constitué de :
i) - une couche de résine polymère ;
ii) - particules de verre de forme arrondie, de préférence des sphères, dispersées dans la couche de résine polymère.

10. Procédé d'obtention de la réduction/ élimination du bruit dans une unité de freinage de véhicule (3) du type comprenant au moins un élément de freinage (6), un support (5) pour l'élément de freinage configuré pour permettre un mouvement relatif de l'élément de freinage par rapport au support pour interagir avec un élément pour être freiné et les première (8) et deuxième (9) surfaces de guidage qui sont intégrées, respectivement, à l'élément de freinage et au support et qui coopèrent les uns avec l'une avec l'autre pour guider et porter l'élément de freinage ; **caractérisé par le fait** de comprendre les étapes de :
- recouvrement d'au moins une desdites première (8) et deuxième (9) surfaces de guidage avec une couche d'une résine polymère dans laquelle des particules de verre forme ronde, de préférence sphérique, et de dimensions micrométriques ont été dispersées ; et
- la cuisson/ le durcissement de la couche d'une résine polymère à une température comprise entre 100 et 210°C, afin de permettre la réticulation de la résine polymère et d'obtenir sur lesdites au moins un dites première (8) et deuxième (9) surfaces de guidage d'un revêtement anti-bruit.

11. Procédé selon la revendication 10, **caractérisé en ce que** la couche de résine polymère, portant en dispersion lesdites particules de verre, est appliquée selon un procédé choisi dans le groupe constitué de : par pulvérisation, au rouleau, par immersion; ladite couche de résine polymère portant dispersées à l'intérieur lesdites particules de verre, pouvant être peinte sans perte d'efficacité après que la résine polymère a été réticulée.
